# FASCICULE DE BREVET EUROPEEN

(11) **EP 3 653 408 B1**
(45) Date de publication et mention de la délivrance du brevet: **08.09.2021**
(21) Numéro de dépôt: 19203982.4
(22) Date de dépôt: 18.10.2019
(51) Int. Cl.: B60D 1/06, B60D 1/28, B60R 9/06, B60D 1/58

(54) **DISPOSITIF DE FIXATION SUR BOULE D'ATTELAGE**
BEFESTIGUNGSVORRICHTUNG AUF KUPPLUNGSKUGEL
DEVICE FOR ATTACHING TO A COUPLING BALL

(30) Priorité: 25.10.2018 FR 1859877
(43) Date de publication de la demande: 20.05.2020
(73) Titulaire: MGTS SA, 1213 Petit Lancy (CH)
(72) Inventeur: BOEGLIN, Philippe, 01420 Corbonod (FR); GUILLE, Benoît, 59262 Sainghin-en-Mélantois (FR)
(74) Mandataire: Touroude, Magali Linda

(56) Documents cités:
- EP-A1- 1 293 386
- EP-A2- 1 170 178
- WO-A1-2017/194754
- FR-A1- 2 925 396
- KR-B1- 101 688 937
- US-A- 5 205 666
- US-A- 5 683 094

## Description

### DOMAINE DE L'INVENTION

La présente invention est relative à un dispositif de fixation destiné à être fixé sur une boule d'attelage d'un véhicule. Elle trouve au moins une application particulièrement avantageuse pour connecter un porte-vélo ou un porte-ski à une boule d'attelage.

### ARRIERE-PLAN TECHNOLOGIQUE

Une boule d'attelage pour véhicule est généralement destinée à relier un véhicule tractant et un véhicule remorqué.

D'autres utilisations de cette boule d'attelage peuvent également être envisagées.

Il est par exemple avantageux d'utiliser cette boule d'attelage comme support pour différents équipements destinés au transport de charges, tels que des porte-vélos, porte-skis ou plateformes.

Un dispositif de fixation qui puisse être monté et démonté sur la boule d'attelage est dès lors nécessaire.

Ce dispositif est de préférence manipulable manuellement, et peut être verrouillé sur la boule d'attelage de façon à garantir une utilisation sûre du système comprenant le dispositif de fixation et l'équipement souhaité.

Le document EP 1095820 A1 divulgue un tel dispositif de fixation comprenant deux demi-coques configurées pour épouser en partie la boule d'attelage.

Un levier de mise en tension comprenant une came arrondie permet de rapprocher et de bloquer par rotation les deux demi-coques dans une position fermée.

Un système de goupille permet de verrouiller le levier pour maintenir le blocage des deux demi-coques dans la position fermée.

Cette solution ne permet pas d'exercer une force de serrage importante. Un inconvénient de cette solution est sa faible force de serrage.

Le document GB 2462868 A divulgue un autre exemple de dispositif de fixation comprenant deux demi-coques et un levier articulé vis-à-vis d'une demi-coque par une biellette.

Cette solution nécessite un levier suffisamment long pour obtenir un bras de levier important. Un inconvénient de cette solution est son encombrement. En outre, on connaît le document EP 1 170 178 A2 qui divulgue un dispositif de fixation selon le préambule de la revendication 1.

En cas d'usure de la boule d'attelage, les solutions décrites ci-dessus perdent en efficacité de serrage.

Un objet de la présente invention est de pallier au moins en partie certains des inconvénients mentionnés ci-dessus.

Plus particulièrement, selon un aspect, l'invention vise à proposer un dispositif de fixation selon la revendication 1 présentant un serrage efficace pour différentes conditions d'usure de la boule d'attelage. En outre, l'invention vise à proposer un procédé de montage selon la revendication 12.

### RESUME DE L'INVENTION

Un premier aspect de l'invention concerne un dispositif de fixation destiné à être fixé sur une boule d'attelage, comprenant une première pièce munie d'une première cavité et une deuxième pièce munie d'une deuxième cavité, lesdites première et deuxième pièces étant mobiles relativement l'une à l'autre entre une position ouverte et une position verrouillée dudit dispositif, lesdites première et deuxième cavités étant configurées pour libérer la boule d'attelage dans la position ouverte et pour immobiliser la boule d'attelage dans la position verrouillée.

Selon l'invention, le dispositif comprend en outre au moins un bras monté rotatif sur la première pièce et une cale montée coulissante sur la deuxième pièce, l'au moins un bras étant configuré pour entraîner la cale en translation de manière à rapprocher progressivement les première et deuxième pièces jusqu'à la position verrouillée.

En particulier, l'au moins un bras articulé en rotation entraîne la cale dans un mouvement de translation jusqu'à ce que les première et deuxième pièces enserrent la boule d'attelage. Les première et deuxième cavités forment alors un logement ou une cavité d'accueil pour la boule d'attelage.

Ce mouvement de translation de la cale n'est pas limité par une butée et peut donc se prolonger jusqu'au serrage effectif de la boule, selon son état d'usure.

L'au moins un bras et la cale sont par ailleurs disposés sur l'une et l'autre des première et deuxième pièces. Un premier appui et un deuxième appui sont ainsi formés respectivement sur les première et deuxième pièces.

Ces premier et deuxième appuis se faisant face permettent d'améliorer l'efficacité de serrage.

Par ailleurs, la coopération entre l'au moins un bras et la cale implique que l'au moins un bras soit orienté en direction de la cale.

Cela permet d'obtenir un dispositif compact qui présente un encombrement limité.

Selon l'invention, la cale coulisse sur un pan incliné de la deuxième pièce, ledit pan incliné présentant une inclinaison par rapport à une direction de rapprochement entre les première et deuxième pièces. En particulier, ce pan incliné est configuré pour que la cale s'éloigne du centre de la cavité d'accueil formée par les première et deuxième cavités lors du serrage.

L'au moins un bras coopère solidairement avec la cale d'une part et avec la première pièce d'autre part. A mesure que la cale s'éloigne, la deuxième pièce se rapproche donc progressivement de la première pièce jusqu'au serrage de la boule d'attelage.

Ce pan incliné permet en outre de doser l'intensité du serrage autour de la boule d'attelage.

Après serrage, la cale est de préférence verrouillée par un élément de tension tel qu'une vis, un levier, et/ou un ressort, dans la position verrouillée.

Selon une possibilité, le dispositif comprend deux bras montés rotatifs de part et d'autre de la première pièce et coopérant avec la cale par deux appuis de part et d'autre de la cale. Cela permet notamment de fournir deux efforts symétriques sur la cale, et d'éviter un effort de torsion sur la cale. Le mouvement en translation de la cale est ainsi optimisé.

Un autre aspect de l'invention est un système de support de charge comprenant le dispositif de fixation selon le premier aspect de l'invention et un équipement permettant de supporter une charge et configuré pour prendre appui sur le dispositif de fixation.

Un autre aspect de l'invention est un système d'attelage comprenant ledit système de support de charge et/ou le dispositif de fixation selon le premier aspect de l'invention et la boule d'attelage.

L'invention porte également sur un procédé de montage utilisant le dispositif de fixation selon le premier aspect de l'invention ou du système. Ce procédé de montage comprend les étapes suivantes :
- Engager verticalement le dispositif dans la position ouverte de façon à ce que les première et deuxième pièces entourent la boule d'attelage,
- Actionner l'au moins un bras de façon à faire coulisser la cale et à rapprocher progressivement les première et deuxième pièces,
- Verrouiller le dispositif en bloquant la cale dans la position verrouillée.

### BREVE INTRODUCTION DES FIGURES

D'autres caractéristiques, buts et avantages de la présente invention apparaitront à la lecture de la description détaillée qui suit, et en regard des dessins annexés donnés à titre d'exemples non limitatifs et sur lesquels :
- la figure 1A illustre en vue filaire le dispositif de fixation selon un premier mode de réalisation de l'invention ;
- les figures 1B à 1E montrent différentes étapes du montage sur une boule d'attelage du dispositif de fixation selon le premier mode de réalisation de l'invention illustré à la figure 1A ;
- les figures 2A et 2B illustrent en vue filaire le dispositif de fixation selon un deuxième mode de réalisation de l'invention ;
- les figures 2C à 2F montrent différentes étapes du montage sur une boule d'attelage du dispositif de fixation selon le deuxième mode de réalisation de l'invention illustré aux figures 2A et 2B ;
- la figure 3A illustre en vue filaire le dispositif de fixation selon un troisième mode de réalisation de l'invention ;
- les figures 3B à 3D montrent différentes étapes du montage sur une boule d'attelage du dispositif de fixation selon le troisième mode de réalisation de l'invention illustré à la figure 3A.

Les dessins sont donnés à titre d'exemples et ne sont pas limitatifs de l'invention. Ils constituent des représentations schématiques de principe destinées à faciliter la compréhension de l'invention et ne sont pas nécessairement à l'échelle des applications pratiques.

### DESCRIPTION DETAILLEE

L'invention selon son premier aspect comprend notamment les caractéristiques optionnelles ci-après pouvant être utilisées en association ou alternativement :
- Selon un mode de réalisation, la cale coulisse sur un pan incliné de la deuxième pièce, selon une direction non colinéaire avec une direction d'engagement du dispositif sur la boule d'attelage.
- Selon un mode de réalisation, la cale coulisse sur un pan incliné de la deuxième pièce, ledit pan incliné présentant une inclinaison telle que la cale s'éloigne d'un centre de la deuxième cavité lorsqu'elle est translatée vers ou au voisinage de la position verrouillée.
   La deuxième pièce présente ainsi une pente permettant de rapprocher ou d'éloigner la cale vis-à-vis de la deuxième cavité, par translation de la cale.
- Selon un mode de réalisation, les première et deuxième pièces sont reliées par une charnière située sur un premier côté de la première pièce et l'au moins un bras est solidaire de la première pièce par un axe situé sur un deuxième côté de la première pièce opposé au premier côté.
   Cette configuration permet d'exercer un bras de levier sur la première pièce. L'efficacité du rapprochement et/ou du serrage entre les première et deuxième pièces est optimisée.
- Selon un mode de réalisation, la cale comprend au moins un ergot et l'au moins un bras comprend une glissière configurée pour coopérer avec ledit au moins un ergot.
   L'au moins un bras et la cale sont ainsi mobiles l'un par rapport à l'autre tout en permettant un entraînement relatif de l'un par rapport à l'autre.
- Selon un mode de réalisation, la glissière comprend une première chicane formant butée dans la position verrouillée.
   La première chicane permet le maintien du dispositif dans une position sensiblement fermée. La butée formée par la première chicane permet le verrouillage du dispositif.
- Selon un mode de réalisation, la glissière comprend une deuxième chicane formant butée dans la position ouverte.
   La deuxième chicane permet de maintenir le dispositif en position ouverte. Cela permet de faciliter l'engagement du dispositif sur la boule d'attelage.
- Selon un mode de réalisation, le dispositif de fixation comprend en outre un élément de tension permettant de maintenir (et éventuellement de translater) la cale dans la position verrouillée.
   L'élément de tension permet de mettre sous tension l'au moins un bras, éventuellement par l'intermédiaire de la cale, progressivement, jusqu'à serrage optimal de la boule d'attelage.
- Selon un mode de réalisation, l'élément de tension est au moins l'un parmi une vis, un levier et un ressort.
- Selon un mode de réalisation, l'au moins un bras comprend un premier bras et un deuxième bras.
- Selon un mode de réalisation, les premier et deuxième bras sont reliés entre eux par une poignée.
- Selon un mode de réalisation, les première et deuxième cavités comprennent un revêtement élastomère au niveau d'une partie destinée à venir au contact de la boule d'attelage.
- Selon un mode de réalisation, le dispositif de fixation comprend en outre un dispositif de fermeture automatique configuré pour rapprocher les première et deuxième pièces dans une position fermée lorsque une boule d'attelage est engagée dans ledit dispositif de fixation.

Dans la présente demande de brevet, une pièce « solidaire » d'une autre pièce signifie que ces pièces dépendent l'une de l'autre et/ou fonctionnent ensemble. Elles peuvent être en contact permanent tout en étant mobiles relativement entre elles.

Nous allons à présent décrire la présente invention au travers de modes de réalisation préférés mais non limitatifs.

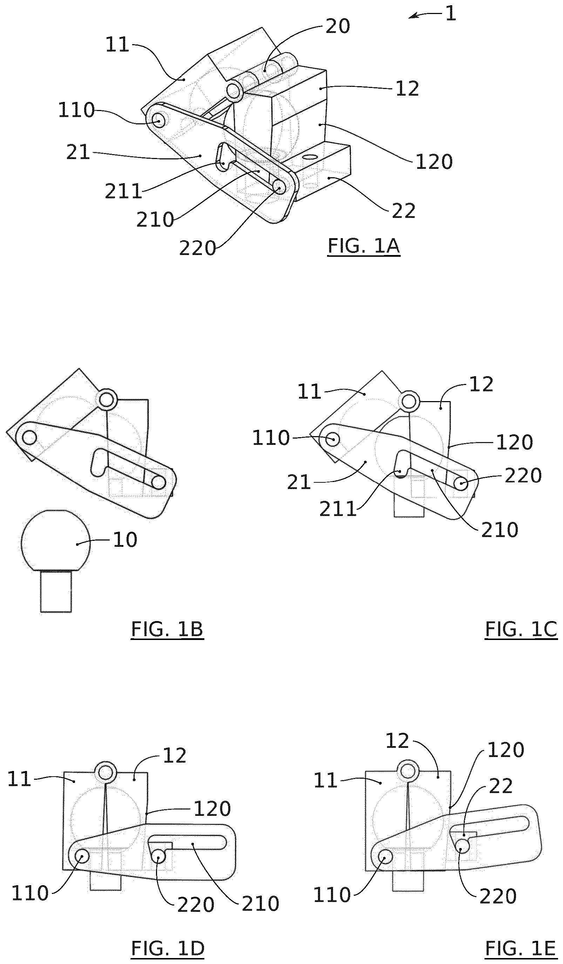

En référence aux figures 1A à 1E, un premier mode de réalisation de l'invention est un dispositif de fixation 1 comprenant de préférence une première pièce 11, une deuxième pièce 12, et une charnière 20 reliant les première et deuxième pièces 11, 12.

Les première et deuxième pièces peuvent ainsi former une mâchoire configurée pour enserrer une boule d'attelage 10. Cette mâchoire est mobile entre une position ouverte, permettant un engagement de la boule d'attelage 10 au sein du dispositif 1, une position fermée, permettant d'enserrer la boule d'attelage 10, et une position verrouillée, permettant la fixation du dispositif 1 sur la boule d'attelage 10.

Dans la position fermée, la boule d'attelage 10 ne peut pas s'extraire de la mâchoire formée par les première et deuxième pièces 11, 12.

Dans la position verrouillée, la boule d'attelage 10 est encastrée dans la mâchoire de sorte à supprimer tout mouvement relatif de la mâchoire vis-à-vis de la boule d'attelage 10.

Les première et deuxième pièces 11, 12 comprennent respectivement des première et deuxième cavités en regard l'une de l'autre.

Ces première et deuxième cavités sont de préférence sensiblement demi-sphériques.

Elles peuvent être au moins partiellement revêtues par un revêtement élastomère. Un tel revêtement permet d'améliorer le contact avec la boule d'attelage 10, en comblant le jeu de serrage par déformation du revêtement et en augmentant l'adhérence entre les première et deuxième cavités et la boule d'attelage 10.

La première cavité forme de préférence une première demi-sphère délimitée par un premier plan et la deuxième cavité forme de préférence une deuxième demi-sphère délimitée par un deuxième plan.

Les intersections respectives entre ces premier et deuxième plans et les première et deuxième demi-sphères forment respectivement un premier cercle et un deuxième cercle.

Les première et deuxième cavités forment une cavité d'accueil ou un logement pour la boule d'attelage 10 dans la position fermée du dispositif 1.

Cette cavité d'accueil peut être sensiblement sphérique. Elle présente de préférence une zone médiane délimitée par les premier et deuxième plans.

Selon la norme ISO 1103:2007, la boule d'attelage 10 peut présenter un diamètre de 50 mm. Les première et deuxième demi-sphères présentent donc de préférence sensiblement un diamètre de 50 mm.

La taille réelle de la boule d'attelage 10 peut cependant varier entre 50 mm et 49,5 mm par exemple, en fonction de son état d'usure notamment.

Dès lors, il est avantageux de former une cavité d'accueil dont la taille est variable et peut être ajustée en fonction de l'état d'usure de la boule d'attelage 10.

La zone médiane de la cavité d'accueil permet d'assurer une telle variabilité.

En particulier, les premier et deuxième plans sont choisis de manière à ce que les premier et deuxième cercles présentent un diamètre strictement inférieur à 50 mm, compris entre 49 mm et 49,5 mm par exemple.

Dès lors, les premier et deuxième plans délimitent de préférence une zone médiane ouverte, permettant d'accommoder un jeu de fermeture et de serrage autour de la boule d'attelage 10.

Selon une possibilité, la première et/ou la deuxième demi-sphère est donc légèrement tronquée de sorte que les parois diamétralement opposées des première et deuxième cavités puissent être rapprochées sur une distance strictement inférieure à 50 mm.

Le plan médian partageant la zone médiane et passant par la charnière 20 sert de référence dans la suite pour le rapprochement des première et deuxième pièces 11, 12 relativement entre elles.

Pour permettre un serrage progressif contre la boule d'attelage 10 quel que soit son état d'usure, les première et deuxième pièces 11, 12 peuvent être reliées entre elles par l'intermédiaire d'un bras articulé 21 et d'une cale coulissante 22.

Le bras articulé 21 est de préférence solidaire de la première pièce 11 au niveau d'un axe 110. Cette solidarité autorise un mouvement de rotation du bras 21 autour de l'axe 110. Cet axe 110 est situé de préférence sur un côté de la première pièce 11 opposé au côté où se situe la charnière 20. En particulier, cet axe 110 peut se trouver dans une moitié de la première pièce 11, tandis que la charnière 20 se trouve de préférence sur une extrémité de l'autre moitié de la première pièce 11.

Le bras articulé 21 est de préférence situé sur un flanc de la première pièce 11 sensiblement perpendiculaire à l'axe 110. Ce flanc est de préférence perpendiculaire au premier plan délimitant la première demi-sphère. L'axe 110 est de préférence parallèle à ce premier plan.

La charnière 20 et l'axe 110 peuvent donc former deux appuis à partir desquels un couple de serrage peut être appliqué à la boule d'attelage 10, entre la position fermée et la position verrouillée notamment.

Le bras articulé 21 est également relié à la cale coulissante 22.

Le bras articulé 21 comprend de préférence une gorge ou glissière 210 coopérant avec un ergot 220 de la cale coulissante 22.

L'ergot 220 est situé sur un flanc de la cale coulissante 22, ledit flanc étant par exemple parallèle ou coplanaire avec le flanc de la première pièce 11.

La glissière 210 s'étend principalement selon un axe longitudinal du bras articulé 21.

Elle présente une longueur selon cet axe longitudinal supérieure à 45 mm et de préférence supérieure à 70 mm. Elle peut être rectiligne ou légèrement courbe. Cela permet notamment de guider le bras 21 en translation entre la position ouverte et la position fermée.

La glissière 210 présente une première extrémité en direction de la première pièce 11 et de préférence une deuxième extrémité en direction de la deuxième pièce 12.

Une première chicane 211 peut former une butée au niveau de la première extrémité.

La première chicane 211 présente de préférence un angle avec la partie rectiligne de la glissière 210 strictement inférieur à 90°, de sorte à retenir l'ergot 220 de la cale 22.

La butée formée par cette première chicane 211 permet avantageusement de maintenir le dispositif 1 dans la position fermée.

Afin de maintenir la butée du bras 21 en appui contre l'ergot 220, un ressort hélicoïdal de torsion peut être agencé au niveau de l'axe 110.

L'effort de rotation produit par ce ressort sur le bras 21 est sensiblement opposé au sens d'extension de la première chicane depuis la partie rectiligne de la glissière 210 jusqu'à la butée.

Ce ressort peut accompagner et/ou produire un coulissement de la cale 22 jusque dans la position verrouillée.

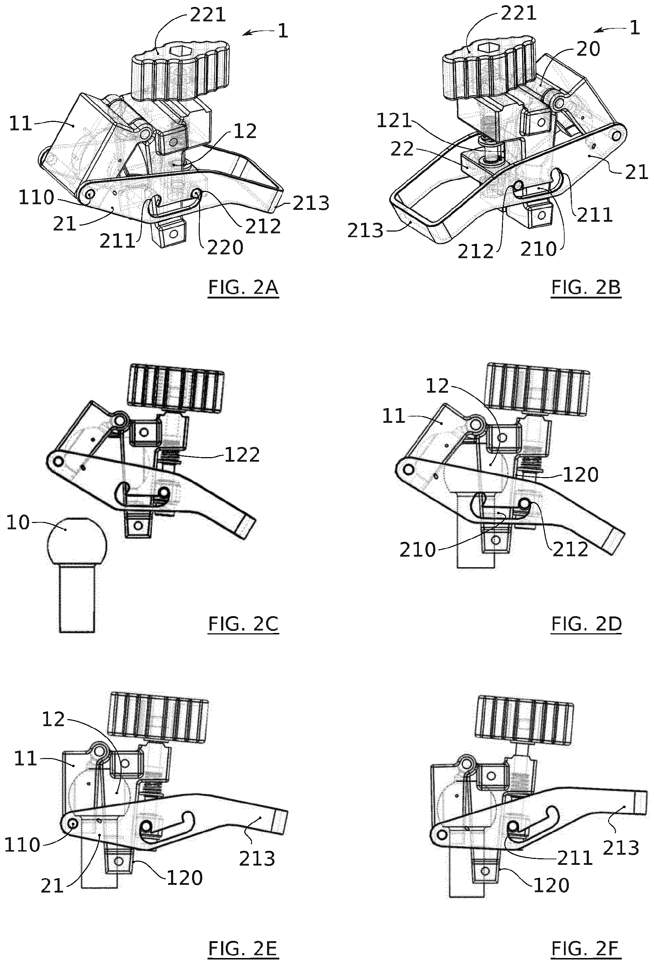

Alternativement ou en complément, un ressort 122 longitudinal, orienté selon l'axe de translation de la cale 22 et solidaire de cette cale 22, peut également accompagner et/ou produire ledit coulissement (figure 2B).

La cale coulissante 22 est solidaire de la deuxième pièce 12. Elle coulisse en translation de préférence sur un pan incliné 120 de la deuxième pièce 12.

Ce pan incliné 120 est de préférence incliné vis-à-vis du plan médian dans les positions fermée et verrouillée du dispositif 1. Il est de préférence incliné vis-à-vis du deuxième plan de la deuxième pièce 12, d'un angle compris entre 5° et 30° par exemple. Ce pan incliné 120 est de préférence plan. Il est de préférence perpendiculaire au flanc de la cale 22 portant l'ergot 220.

Il peut comprendre au moins une rainure 121 configurée pour guider un mouvement de translation de la cale 22 (figure 2C).

Un tel pan incliné 120 permet de rapprocher ou d'éloigner par coulissement la cale 22 vis-à-vis du plan médian et/ou du deuxième plan. Il forme de préférence un coin avec le plan médian et/ou le deuxième plan, de sorte que, lors d'une translation de la cale 22 dirigée du côté de la charnière 20, la cale 22 produise sur la butée un effort dont la composant principale est perpendiculaire à la direction de translation et dirigée du côté du logement.

Cela permet notamment de passer de la position fermée à la position verrouillée.

Une séquence d'étapes de montage du dispositif 1 sur une boule d'attelage 10 est illustrée en référence aux figures 1B à 1E.

Le dispositif 1 est d'abord engagé sur la boule d'attelage 10, dans la position ouverte (figures 1B et 1C).

Les première et deuxième pièces 11, 12 sont ensuite rapprochées en translatant le bras 21 le long de la glissière 210, jusqu'à ce que l'ergot 220 vienne en butée contre la première chicane 211.

Le dispositif est alors en position fermée (figure 1D).

La cale 22 est ensuite éloignée du plan médian par translation le long du pan incliné 120, jusqu'au blocage des première et deuxième pièces 11, 12 contre la boule d'attelage 10.

Le dispositif est alors en position verrouillée (figure 1E).

Lors du verrouillage, et en partie lors de la fermeture, un effort de traction est appliqué sur l'axe 110. Après contact des parois des première et deuxième cavités avec la boule d'attelage 10, un contre-effort de traction sensiblement opposé à l'effort de traction se développe au niveau de la charnière 20, formant le couple de serrage.

Ce couple de serrage augmente progressivement entre la position fermée et la position verrouillée du dispositif 1, ce qui permet d'ajuster le serrage sur la boule d'attelage quel que soit son état d'usure.

Ce premier mode de réalisation du dispositif 1 décrit en référence aux figures 1A à 1E comprend un seul bras 21. La conception d'un tel dispositif 1 est simplifiée.

Selon une possibilité non illustrée, le dispositif 1 selon ce premier mode de réalisation peut comprendre deux bras 21 disposés de part et d'autre des première et deuxième pièces 11, 12.

Cela permet notamment de mieux répartir les efforts appliqués aux première et deuxième pièces 11, 12 lors de la fermeture et du verrouillage du dispositif 1.

D'autres modes de réalisation du dispositif de fixation selon l'invention peuvent être envisagés. Seules les caractéristiques distinctes du premier mode de réalisation sont décrites ci-après, les autres caractéristiques non décrites étant réputées identiques à celles du premier mode de réalisation.

Selon un deuxième mode de réalisation du dispositif 1 de fixation illustré aux figures 2A et 2B, la cale 22 peut être reliée à un élément de tension tel qu'une vis 221.

Cet élément de tension est notamment configuré pour assister le mouvement de translation de la cale 22 sur le pan incliné 120, au voisinage de la position verrouillée.

Il peut être combiné avec un ressort hélicoïdal au niveau de l'axe 110.

Il est relié à la cale 22 et prend appui sur la deuxième pièce 12.

Cet élément de tension permet de sécuriser le verrouillage du dispositif 1.

Un élément de tension sous forme de vis 221 permet de limiter l'encombrement global du dispositif 1.

Cela permet également de régler finement la position de verrouillage.

Selon ce mode de réalisation, deux bras articulés 21 sont disposés de part et d'autre des première et deuxième pièces 11, 12.

Ces bras articulés sont reliés à la première pièce 11 par un même axe 110.

Ils coopèrent avec deux ergots situés de part et d'autre de la cale 22, par l'intermédiaire de deux glissières 210.

Les deux bras articulés 21 permettent d'optimiser l'effort appliqué à la cale 22 et à l'axe 110 entre la position fermée et la position verrouillée du dispositif 1.

Les glissières 210 peuvent comprendre chacune une première et une deuxième chicane 211, 212 formant butée au niveau de leur première et deuxième extrémités respectives.

Les deuxièmes chicanes 212 présentent de préférence un angle avec la partie rectiligne des glissières 210 strictement inférieur à 90°, de sorte à retenir les ergots 220 de la cale 22.

La butée formée par ces deuxièmes chicanes 212 permet avantageusement de maintenir le dispositif 1 dans la position ouverte, tel qu'illustré aux figures 2C et 2D. Cela permet d'améliorer l'ergonomie d'utilisation du dispositif 1, en particulier pour l'engagement de la boule d'attelage 10 lors du montage.

Pour améliorer la préhension et/ou l'effort appliqué sur les bras articulés 21 par un utilisateur, ces bras 21 peuvent comprendre une poignée 213.

Cette poignée 213 relie de préférence les deux bras 21 sur une partie opposée à la partie portant l'axe 110.

Cette poignée 213 permet notamment d'exercer un bras de levier lorsque les ergots 220 de la cale 22 sont en butée au niveau des premières chicanes 211, tel qu'illustré aux figures 2E et 2F.

Cette poignée 213 permet également de limiter voire de supprimer un effort de torsion parasite sur les bras articulés 21.

Selon une possibilité, le dispositif 1 selon ce deuxième mode de réalisation peut comprendre un seul bras 21.

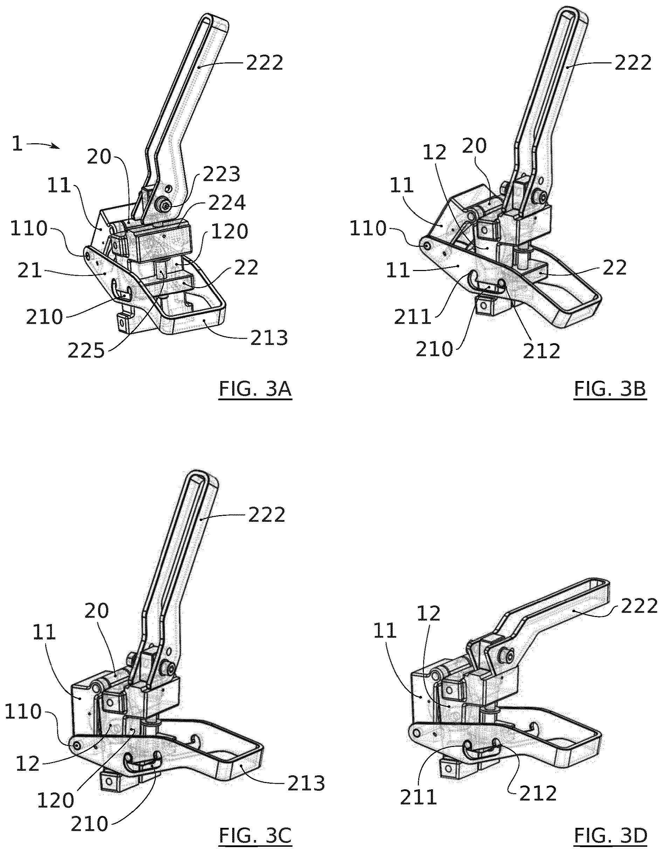

Selon un troisième mode de réalisation du dispositif 1 de fixation illustré à la figure 3A, l'élément de tension peut être un levier 222.

Un tel levier 222 est de préférence désaxé par rapport à l'axe 110 de rotation des bras articulés 21, de façon à ne pas gêner une manipulation de la poignée 213 par exemple.

Ce levier 222 peut prendre appui sur la deuxième pièce 12 et est de préférence cinématiquement relié à la cale 22 par une tige 225.

Un pivot 223 peut relier le levier 222 et la tige 225.

Le levier 222 peut être configuré de façon à verrouiller le dispositif 1 lorsqu'il est abaissé, et de façon à déverrouiller le dispositif 1 lorsqu'il est relevé, tel qu'illustré aux figures 3B à 3D.

En particulier, la surface d'appui du levier 222 destinée à coopérer avec la deuxième pièce 12 peut être excentrique, de façon à éloigner le pivot 223 de la deuxième pièce 12 en abaissant le levier 222. La cale 22 est alors translatée jusqu'à la position verrouillée.

Le serrage est ainsi progressif jusqu'au verrouillage en position abaissée du levier 222. Un méplat sur la surface d'appui du levier 222 permet de maintenir le levier 222 en position abaissée et le dispositif en position verrouillée.

Un tel levier 222 permet donc de verrouiller/déverrouiller rapidement le dispositif 1.

La surface d'appui excentrique du levier 222 peut être configurée pour coopérer avec au moins un élément de guidage, par exemple des rainures 224, sur la deuxième pièce 12.

Ces rainures 224 permettent d'assurer une bonne coopération entre la deuxième pièce 12 et la surface d'appui du levier 222 lorsqu'il est abaissé et/ou relevé par rotation autour de l'axe du pivot 223, dit axe transversal.

Le levier 222 est de préférence configuré pour tourner autour de l'axe défini par la tige 225 le reliant à la cale 22, dit axe longitudinal. Un pas de vis, par exemple au niveau de cette tige 225, peut dès lors permettre de régler la distance entre la cale 22 et le pivot 223, en tournant le levier 222 autour de cet axe longitudinal.

La force de levée de la cale 22 peut ainsi être avantageusement ajustée, par demi-tours du levier 222 autour de l'axe longitudinal, pour adapter le dispositif 1 de fixation à des boules d'attelage 10 de tailles variables.

Selon une possibilité, les première et deuxième pièces 11, 12 sont configurées pour se fermer automatiquement lorsque la boule d'attelage 10 est engagée. Un dispositif de fermeture automatique (non illustré), par exemple à bascule, peut être prévu à cet effet. Un tel dispositif de fermeture automatique est parfaitement classique et connu de l'homme du métier.

L'invention n'est pas limitée aux modes de réalisation précédemment décrits mais s'étend à tous modes de réalisation entrant dans la portée des revendications.

En particulier, une caractéristique quelconque d'un mode de réalisation décrit plus haut peut être combinée avec d'autres caractéristiques d'autres modes de réalisation décrits plus hauts.

## Revendications

1. Dispositif de fixation (1) destiné à être fixé sur une boule d'attelage (10), comprenant une première pièce (11) munie d'une première cavité et une deuxième pièce (12) munie d'une deuxième cavité, lesdites première et deuxième pièces (11, 12) étant mobiles relativement l'une à l'autre entre une position ouverte et une position verrouillée dudit dispositif (1), lesdites première et deuxième cavités étant configurées pour libérer la boule d'attelage (10) dans la position ouverte et pour immobiliser la boule d'attelage (10) dans la position verrouillée, ce dispositif (1) étant **caractérisé en ce qu'**il comprend en outre au moins un bras (21) monté rotatif sur la première pièce (11) et une cale (22) montée coulissante sur un pan incliné (120) de la deuxième pièce (12), l'au moins un bras (21) étant configuré pour entraîner la cale (22) en translation de manière à rapprocher progressivement les première et deuxième pièces (11, 12) jusqu'à la position verrouillée, ledit pan incliné (120) présentant une inclinaison telle que la cale s'éloigne d'un centre de la deuxième cavité lorsqu'elle est translatée vers la position verrouillée.

2. Dispositif (1) selon la revendication précédente dans lequel les première et deuxième pièces (11, 12) sont reliées par une charnière (20) située sur un premier côté de la première pièce (11) et dans lequel l'au moins un bras (21) est solidaire de la première pièce (11) par un axe (110) situé sur un deuxième côté de la première pièce (11) opposé au premier côté.

3. Dispositif (1) selon l'une quelconque des revendications précédentes, dans lequel la cale (22) comprend au moins un ergot (220) et l'au moins un bras (21) comprend une glissière (210) configurée pour coopérer avec ledit au moins un ergot (220).

4. Dispositif (1) selon la revendication précédente, dans lequel la glissière (210) comprend une première chicane (211) formant butée dans la position verrouillée.

5. Dispositif (1) selon l'une quelconque des deux revendications précédentes, dans lequel la glissière (210) comprend une deuxième chicane (212) formant butée dans la position ouverte.

6. Dispositif (1) selon l'une quelconque des revendications précédentes comprenant en outre un élément de tension permettant de maintenir la cale (22) dans la position verrouillée.

7. Dispositif (1) selon la revendication précédente, dans lequel l'élément de tension est au moins l'un parmi une vis (221), un levier (222) et un ressort.

8. Dispositif (1) selon l'une quelconque des revendications précédentes dans lequel l'au moins un bras (21) comprend un premier bras et un deuxième bras, et dans lequel les premier et deuxième bras sont reliés entre eux par une poignée (213).

9. Dispositif (1) selon l'une quelconque des revendications précédentes dans lequel les première et deuxième cavités comprennent un revêtement élastomère au niveau d'une partie destinée à venir au contact de la boule d'attelage (10).

10. Dispositif (1) selon l'une quelconque des revendications précédentes comprenant en outre un dispositif de fermeture automatique configuré pour rapprocher les première et deuxième pièces (11, 12) dans une position fermée lorsque une boule d'attelage (10) est engagée dans le dispositif de fixation (1).

11. Système de support de charge comprenant un dispositif de fixation (1) selon l'une quelconque des revendications précédentes et un équipement de support de charge configuré pour prendre appui sur ledit dispositif de fixation (1).

12. Procédé de montage sur une boule d'attelage (10) du dispositif de fixation (1) selon l'une quelconque des revendications 1 à 10 ou du système selon la revendication précédente, comprenant les étapes suivantes :
- Engager verticalement le dispositif (1) dans la position ouverte de façon à ce que les première et deuxième pièces (11, 12) entourent la boule d'attelage (10),
- Actionner l'au moins un bras (21) de façon à faire coulisser la cale (22) et à rapprocher progressivement les première et deuxième pièces (11, 12),
- Verrouiller le dispositif (1) en bloquant la cale (22) dans la position verrouillée..

## Patentansprüche

1. Befestigungsvorrichtung (1) zum Befestigen an einer Kupplungskugel (10), umfassend ein erstes Teil (11) mit einem ersten Hohlraum und ein zweites Teil (12) mit einem zweiten Hohlraum, wobei das erste und das zweite Teil (11, 12) zwischen einem Offenzustand und einem Verriegelungszustand der Vorrichtung (1) relativ zueinander bewegbar sind, wobei der erste und der zweite Hohlraum eingerichtet sind, die Kupplungskugel (10) im Offenzustand freizugeben und die Kupplungskugel (10) im Verriegelungszustand zu immobilisieren, wobei diese Vorrichtung (1) **dadurch gekennzeichnet ist, dass** sie ferner mindestens einen drehbar auf dem ersten Teil (11) montierten Arm (21) und einen gleitend auf einer geneigten Fläche (120) des zweiten Teils (12) montierten Klotz (22) umfasst, wobei der mindestens eine Arm (21) eingerichtet ist, um den Klotz (22) translatorisch anzutreiben, um das erste und zweite Teil (11, 12) allmählich in den Verriegelungszustand zu bringen, wobei die geneigte Fläche (120) eine solche Neigung aufweist, dass sich der Klotz von einer Mitte des zweiten Hohlraums wegbewegt, wenn er in den Verriegelungszustand verschoben wird.

2. Vorrichtung (1) nach dem vorhergehenden Anspruch, wobei das erste und das zweite Teil (11, 12) durch ein Scharnier (20) verbunden sind, das sich auf einer ersten Seite des ersten Teils (11) befindet und wobei der mindestens eine Arm (21) an dem ersten Teil (11) durch eine Achse (110) fest verbunden ist, die sich auf einer zweiten Seite des ersten Teils (11) gegenüber der ersten Seite befindet.

3. Vorrichtung (1) nach einem der vorhergehenden Ansprüche, wobei der Klotz (22) mindestens einen Vorsprung (220) umfasst und der mindestens eine Arm (21) eine Laufschiene (210) umfasst, die eingerichtet ist, um mit dem mindestens einen Vorsprung (220) zusammenzuwirken.

4. Vorrichtung (1) nach dem vorhergehenden Anspruch, wobei die Laufschiene (210) eine erste Schikane (211) umfasst, die im Verriegelungszustand einen Anschlag bildet.

5. Vorrichtung (1) nach einem der beiden vorhergehenden Ansprüche, wobei die Laufschiene (210) eine zweite Schikane (212) umfasst, die im Offenzustand einen Anschlag bildet.

6. Vorrichtung (1) nach einem der vorhergehenden Ansprüche, ferner umfassend ein Spannelement, das erlaubt, den Klotz (22) im Verriegelungszustand zu halten.

7. Vorrichtung (1) nach dem vorhergehenden Anspruch, wobei das Spannelement mindestens eines von einer Schraube (221), einem Hebel (222) und einer Feder ist.

8. Vorrichtung (1) nach einem der vorhergehenden Ansprüche, wobei der mindestens eine Arm (21) einen ersten Arm und einen zweiten Arm umfasst und wobei der erste und der zweite Arm durch einen Griff (213) miteinander verbunden sind.

9. Vorrichtung (1) nach einem der vorhergehenden Ansprüche, wobei der erste und der zweite Hohlraum eine Elastomerbeschichtung auf Höhe eines Abschnitts umfassen, der dazu bestimmt ist, mit der Kupplungskugel (10) in Kontakt zu kommen.

10. Vorrichtung (1) nach einem der vorhergehenden Ansprüche, ferner umfassend eine automatische Schließvorrichtung, die eingerichtet ist, um das erste und das zweite Teil (11, 12) in einen Verriegelungszustand zueinander zu bringen, wenn eine Kupplungskugel (10) in die Befestigungsvorrichtung (1) eingreift.

11. Lasttragendes System, umfassend eine Befestigungsvorrichtung (1) nach einem der vorhergehenden Ansprüche und eine lasttragende Ausrüstung, die eingerichtet ist, um auf der Befestigungsvorrichtung (1) aufzuliegen.

12. Verfahren zum Anbringen der Befestigungsvorrichtung (1) nach einem der Ansprüche 1 bis 10 oder des Systems nach dem vorhergehenden Anspruch an einer Kupplungskugel (10), umfassend die folgenden Schritte:
- die Vorrichtung (1) im Offenzustand vertikal derart einrasten lassen, dass das erste und zweite Teil (11, 12) die Kupplungskugel (10) umschließen,
- den mindestens einen Arm (21) betätigen, um den Klotz (22) zu verschieben und das erste und das zweite Teil (11, 12) allmählich zusammenzubringen,
- die Vorrichtung (1) durch Blockieren des Klotzes (22) im Verriegelungszustand zu verriegeln.

## Claims

1. Attachment device (1) intended to be attached to a hitch ball (10), comprising a first part (11) provided with a first cavity and a second part (12) provided with a second cavity, said first and second parts (11, 12) being movable relative to one another between an open position and a locked position of said device (1), said first and second cavities being designed to release the hitch ball (10) in the open position and to immobilize the hitch ball (10) in the locked position, said device (1) being **characterized in that** it further comprises at least one arm (21) rotatably mounted on the first part (11) and a wedge (22) slidably mounted on an inclined face (120) of the second part (12), the at least one arm (21) being designed to translate the wedge (22) so as to gradually bring the first and second parts (11, 12) together until the locked position is reached, said inclined face (120) having an inclination that is such that the wedge moves away from a center of the second cavity when translated into the locked position.

2. Device (1) according to the preceding claim, wherein the first and second parts (11, 12) are connected by a hinge (20) located on a first side of the first part (11), and wherein the at least one arm (21) is secured to the first part (11) by a pin (110) located on a second side of the first part (11) opposite the first side.

3. Device (1) according to either of the preceding claims, wherein the wedge (22) comprises at least one lug (220) and the at least one arm (21) comprises a guide (210) designed to interact with said at least one lug (220).

4. Device (1) according to the preceding claim, wherein the guide (210) comprises a first deflector (211) which forms a stop in the locked position.

5. Device (1) according to either of the two preceding claims, wherein the guide (210) comprises a second deflector (212) which forms a stop in the open position.

6. Device (1) according to either of the preceding claims, further comprising a tension element for retaining the wedge (22) in the locked position.

7. Device (1) according to the preceding claim, wherein the tension element is at least one of a screw (221), a lever (222), and a spring.

8. Device (1) according to either of the preceding claims, wherein the at least one arm (21) comprises a first arm and a second arm, and wherein the first and second arms are interconnected by a handle (213).

9. Device (1) according to either of the preceding claims, wherein the first and second cavities comprise an elastomeric coating at a part intended to come into contact with the hitch ball (10).

10. Device (1) according to either of the preceding claims, further comprising an automatic closing device designed to bring the first and second parts (11, 12) together in a closed position when a hitch ball (10) is coupled to the attachment device (1).

11. Load-bearing system, comprising an attachment device (1) according to any of the preceding claims and load-bearing equipment designed to engage with said attachment device (1).

12. Method for mounting the attachment device (1) according to any of claims 1 to 10 or the system according to the preceding claim on a hitch ball (10), comprising the following steps:
- vertically coupling the device (1) in the open position so that the first and second parts (11, 12) surround the hitch ball (10),
- actuating at least one arm (21) so as to slide the wedge (22) and gradually bring the first and second parts (11, 12) together,
- locking the device (1) by blocking the wedge (22) in the locked position.
